# EUROPÄISCHE PATENTSCHRIFT

(11) **EP 0 394 514 B1**
(45) Veröffentlichungstag und Bekanntmachung des Hinweises auf die Patenterteilung: **13.07.1994**
(21) Anmeldenummer: 89107476.7
(22) Anmeldetag: 25.04.1989
(51) Int. Cl.: G05B 19/05, G05B 9/03

(54) **Verfahren zur Synchronisation von Datenverarbeitungsanlagen**
Method for the synchronisation of data-processing equipments
Méthode de synchronisation d'équipements de traitement de données

(43) Veröffentlichungstag der Anmeldung: 31.10.1990
(73) Patentinhaber: SIEMENS AKTIENGESELLSCHAFT, 80333 München (DE)
(72) Erfinder: Daar, Horst, Dr.-Ing., D-8520 Erlangen (DE); Barthel, Herbert, Dipl.-Ing., D-8522 Herzogenaurach (DE)

(56) Entgegenhaltungen:
- EP-A- 0 075 278
- EP-A- 0 104 490
- DE-A- 2 458 224
- DE-A- 3 633 953
- ELECTRONIQUE INDUSTRIELLES. no. 51, 15 April 1983, PARIS FR Seiten 61 - 67;" Les automates et la sEcurité "
- SIEMENS POWER ENGINEERING & AUTOMATION. vol. 7, no. 6,1986, BERLIN DE Seiten 408 - 410; EURINGER Manfred et al.: "Fault-Tolerant andFail-Safe Process Control with Redundant Automation Systems"
- IEEE MICRO. vol. 7, no. 5, Oktober 1987, NEW YORK US Seiten 27 - 50; KIRRMANNHubert D. et al.: "Fault Tolerance in Process Contol : An Overview and Examplesof European Products"

## Beschreibung

Die vorliegende Erfindung betrifft ein Verfahren zur Synchronisation von Datenverarbeitungsanlagen gemäß dem Oberbegriff des Anspruchs 1. Ein derartiges Verfahren ist beispielsweise aus der DE-A-36 33 953 bekannt.

In der DE-A-36 33 953 wird für ein programmgesteuertes, redundant mit zwei Teilsystemen aufgebautes Automatisierungsgerät vorgeschlagen, zwei identische Programmabläufe vorzusehen und vom Betriebssystem jeweils zu Beginn bestimmter Programmabschnitte eine gegenseitige Synchronisation der Programmabläufe durchzuführen.

Bei solchen identischen Programmen, die in Programmabschnitte eingeteilt sind, kann es vorkommen, daß eine Synchronisation der Datenverarbeitungsanlagen erst zu einem späteren Zeitpunkt als dem des Beginn eines neuen Programmabschnittes, oder sogar schon vor Beginn des nächsten neuen Programmabschnittes, nötig ist.

Aufgabe der Erfindung ist es deshalb, ein Verfahren zur Synchronisation von Datenverarbeitungsanlagen zu schaffen, bei dem eine Synchronisation nur dann vorgenommen wird, wenn sie für den Programmgleichlauf der Datenverarbeitungsanlagen erforderlich ist.

Wenn für jede der Datenverarbeitungsanlagen Unterbrechungsereignisse erkennbar sind, die eine mittelbare Synchronisation erfordern, wird die Aufgabe dadurch gelöst,
a) daß das Steuerprogramm (SP) in Programmbausteine mit vorgebbaren Bausteingrenzen (BG1 bis BG4) unterteilbar ist und
c) daß jede Datenverarbeitungsanlage (ZG1,ZG2), die während des Programmablaufs ein Unterbrechungsereignis (UE) erkennt, den aktuellen Programmbaustein bis zur folgenden Bausteingrenze (BG1 bis BG4) abarbeitet und sich anschließend mit den übrigen Datenverarbeitungsanlagen (ZG1,ZG2) synchronisiert.

Wenn das Steuerprogramm Befehle aufweist, die eine unmittelbare Synchronisation erfordern, sogenannte Interne-Befehle, wird die Aufgabe dadurch gelöst,
e) daß jede der Datenverarbeitungsanlagen (ZG1,ZG2), die vor einer anderen Datenverarbeitungsanlage (ZG1,ZG2) einen Internen-Befehl (BI) decodiert, solange im Wartezustand bleibt, bis mindestens eine der verbleibenden Datenverarbeitungsanlagen (ZG1,ZG2) ebenfalls den Internen-Befehl (BI) bearbeitet hat.

Die beiden Verfahren können selbstverständlich auch miteinander kombiniert werden.

Das Verfahren kann dabei für mindestens zwei redundante Datenverarbeitungsanlagen vorteilhaft verwendet werden, denen jeweils eine identische Ein-Ausgabeeinheit zugeordnet ist, die mittels der Befehle des identischen Steuerprogramms einer jeweiligen Datenverarbeitungsanlage bedienbar ist. Damit wird ein redundanter zweikanaliger Betrieb, beispielsweise einer Prozeßsteuerung, ermöglicht.

Dem Anwender können identische Ein-Ausgabeeinheiten, die eine Datenverarbeitungsanlage automatisch erkennt, beispielsweise über ein Bildschirmterminal gemeldet werden, wobei dieser durch eine ja/nein-Entscheidung eine Übernahme der identischen Ein- Ausgabeeinheiten durch das identische Steuerprogramm als Redundante bewirken kann.

Eine weitere Ausgestaltung der Erfindung ermöglicht einen redundanten einkanaligen Betrieb, indem mindestens zwei redundanten Datenverarbeitungsanlagen eine Ein-Ausgabeeinheit zugeordnet ist, die alternativ mittels der Befehle jeweils eines identischen Steuerprogramms einer Datenverarbeitungsanlage bedienbar ist.

Bei der Abarbeitung des identischen Steuerprogramms durch mindestens zwei Datenverarbeitungsanlagen kann es von Vorteil sein, daß eine Datenverarbeitungsanlage die Prozeßführung übernimmt und die übrigen Datenverarbeitungsanlagen redundant an der Prozeßführung beteiligt sind. Beim einkanaligen Betrieb bewirkt die prozeßführende Datenverarbeitungsanlage die Steuerung des Prozesses und die übrigen redundanten Datenverarbeitungsanlagen übernehmen passiv die Prozeßzustände und verfügen damit zu jeder Zeit über die aktuellen Daten - Prozeßabbild - des Prozesses. Beim zweikanaligen Betrieb kann beispielsweise die Überwachung der Synchronisation von der prozeßführenden Datenverarbeitungsanlage übernommen werden. Eine Übergabe der Prozeßführung auf eine redundante Datenverarbeitungsanlage ist in beiden Fällen jederzeit ohne Unterbrechung oder Störung des Prozesses möglich.

Eine weitere vorteilhafte Ausbildung der Erfindung besteht darin, daß Bedieneingaben, die eine Änderung des Anwenderprogramms beinhalten können, während des Betriebs mindestens einer Datenverarbeitungsanlage an dieser vornehmbar sind und die Bedieneingaben allen weiteren im Betrieb befindlichen Datenverarbeitungsanlagen automatisch übermittelt werden.

Eine Änderung des Steuerprogramms ist vorteilhaft nach folgenden Verfahrensschritten vornehmbar:
a) Eine redundante Datenverarbeitungsanlage wird von den übrigen Datenverarbeitungsanlagen abgekoppelt,
b) die Änderung des Steuerprogramms wird an der abgekoppelten Datenverarbeitungsanlage vorgenommen,
c) die abgekoppelte Datenverarbeitungsanlage wird wieder mit den übrigen Datenverarbeitungsanlagen verbunden und übernimmt die aktuellen Daten des prozeßführenden oder einer weiteren redundanten Datenverarbeitungsanlage,
d) die Datenverarbeitung mit dem geänderten Steuerprogramm übernimmt die Prozeßführung.

Falls eine Datenverarbeitungsanlage beispielsweise wegen einer vorzunehmenden Reparatur ausgewechselt werden muß, ist dies nach folgenden Verfahrensschritten vornehmbar:
a) Falls die auszuwechselnde Datenverarbeitungsanlage prozeßführend ist, wird die Prozeßführung an eine redundante Datenverarbeitungsanlage übergeben,
b) die auszuwechselnde Datenverarbeitungsanlage wird von den übrigen Datenverarbeitungsanlagen abgekoppelt,
c) die einzuwechselnde Datenverarbeitungsanlage wird mit den übrigen Datenverarbeitungsanlagen verbunden,
d) die redundante Hard- und Software der eingewechselten Datenverarbeitungsanlage wird mit der redundanten Hard- und Software einer redundanten Datenverarbeitungsanlage verglichen,
e) nur bei Gleichheit der redundanten Hard- und Software werden die aktuellen Daten der prozeßführenden oder einer redundanten Datenverarbeitungsanlage automatisch-übernommen und die eingewechselte Datenverarbeitungsanlage wird automatisch am Betrieb beteiligt,
f) bei Ungleichheit der redundanten Hard- und Software erfolgt eine Fehlermeldung.

Sowohl bei der oben beschriebenen Durchführung von Bedieneingaben, die auch eine Änderung des Anwenderprogramms beinhalten können, als auch bei der beschriebenen Änderung des Steuerprogramms und bei der zuletzt beschriebenen Auswechslung einer Datenverarbeitungsanlage, ist gewährleistet, daß der gesteuerte Prozeß in keiner Weise unterbrochen oder gestört wird. Damit wird eine hohe Verfügbarkeit der prozeßsteuernden Datenverarbeitungsanlagen erreicht.

Eine weitere Steigerung der Verfügbarkeit der Datenverarbeitungsanlagen läßt sich dadurch erreichen, daß die Übernahme der aktuellen Daten durch eine Datenverarbeitungsanlage, beispielsweise nach erfolgtem Gerätewechsel die Menge der zu übertragenden Daten vom Anwender projektierbar ist und der Zeitpunkt der Datenübernahme vom Anwenderprogramm gesteuert wird. Damit kann die zeitraubende Datenübermittlung in den ruhigen Phasen der Prozeßsteuerung durchgeführt werden.

Ein Ausführungsbeispiel der Erfindung ist in der Zeichnung dargestellt und wird im folgenden näher erläutert. Dabei zeigen:
- FIG 1: zwei Datenverarbeitungsanlagen in zweikanalig redundanter Prozeßsteuerung,
- FIG 2: eine schematische Darstellung der identischen Steuerprogramme der Datenverarbeitungsanlagen.

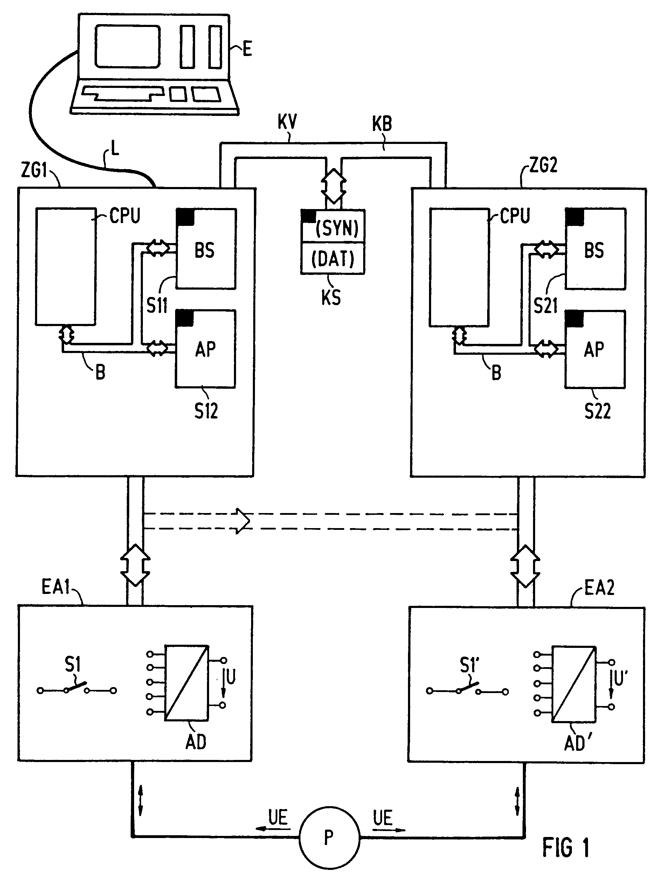

FIG 1 zeigt zwei Datenverarbeitungsanlagen ZG1, ZG2 in zweikanalig redundanter Prozeßsteuerung eines Prozesses P. Sie besteht aus einem Eingabegerät E, einem ersten und einem zweitem Zentralgerät ZG1, ZG2 wobei das erste Zentralgerät ZG1 über eine Leitung L mit dem Eingabegerät E verbunden ist (Die Begriffe Datenverarbeitungsanlage und Zentralgerät werden im folgenden Synonym verwendet. Eine Datenverarbeitungsanlage im Sinne dieser Anmneldung kann eine elementare Funktionseinheit zur Verarbeitung von Daten sein, kann aber auch eine Rechenanlage mit allen bekannten Baueinheiten, z.B. Ein-Ausgabe-Baugruppen, Massenspeicher, etc. sein). Die beiden Zentralgeräte ZG1, ZG2 sind über eine Kommunikationsvorrichtung KV, die z.B. aus einem Kommunikationsbus KB und aus einem Kommunikationsspeicher KS besteht, miteinander verbunden. Der Kommunikationsbus KB kann beispielsweise ein paralleler oder ein serieller Bus sein. Die Kommunikationsvorrichtung KV kann auch weitere Elemente, beispielsweise Baugruppen für die Steuerung des Datenflusses auf dem Kommunikationsbus, etc. enthalten. Alle Elemente der Kommunikationsvorrichtung KV - ausgenommen der Kommunikationsbus KB - könnten selbstverständlich auch Bestandteil eines der Zentralgeräte ZG1, ZG2 sein.

Von den Zentralgeräten ZG1, ZG2 sind in der FIG 1 nur die für die Beschreibung der Erfindung wesentlichen, für beide Geräte identischen Bestandteile symbolisiert. Jedes Zentralgerät ZG1, ZG2 besitzt eine Zentraleinheit CPU und zwei Speicherbausteine S11, S12 bzw. S21, S22, wobei die Speicher S11, S21 jeweils das Betriebssystem BS beinhalten und die Speicher S12, S22 das jeweilige Anwenderprogramm AP. Die Aufteilung des Betriebssystems BS und des Anwenderprogramms AP auf zwei Speicherbausteine S11, S12 bzw. S21, S22 ist jedoch nicht zwingend. Beide Programme BS, AP könnten genausogut in nur einem Speicherbaustein oder in mehreren Speicherbausteinen untergebracht werden. Ein Bussystem B, verbindet die jeweilige Zentraleinheit CPU mit den Speicherbausteinen S11, S12 bzw. S21, S22. Die Datenflußrichtung auf dem Bussystem B ist jeweils durch Pfeile gekennzeichnet. Aus der Kennzeichnung der Datenflußrichtung vom und zum Speicherbaustein S11 bzw. S21 der das Betriebssystem BS beinhaltet, ist ersichtlich, daß auch diese Speicherbausteine S11, S21 als Schreib-Lese-Speicher ausgebildet sein können. Das Betriebssystem BS muß nicht fester Bestandteil eines jeden Zentralgerätes ZG1, ZG2 sein, sondern kann auch vom jeweiligen Anwender über das Eingabegerät E ebenso wie das Anwenderprogramm AP, eingegeben werden. Für vorzunehmende Programm- oder Dateneingaben bzw. Änderungen genügt es auch, das Eingabegerät E lediglich mit einem Zentralgerät ZG1 oder ZG2 zu verbinden, da die in einem Zentralgerät ZG1, ZG2 enthaltenen Anwenderprogramme AP, BS automatisch über die Kommunikationsvorrichtung KV an die anderen Zentralgeräte ZG2, ZG1 übermittelbar sind. Der Anwender kann damit den Verbund mehrerer Datenverarbeitungsanlagen ZG1, ZG2 wie ein Monogerät bedienen.

Jede Datenverarbeitungsanlage ist über eine ihr zugeordnete Ein-Ausgabeeinheit EA1, EA2 mit einem gemeinsamen Prozeß P verbunden. Der Prozeß P verfügt über redundante digitale und analoge Steuervorrichtungen und Signalgeber, die im jeweiligen Block der Ein-Ausgabegeräte EA1, EA2 durch die Schalter S1 bzw. S1′ und die Analog-Digital-Wandler AD bzw. AD′ symbolisiert sind.

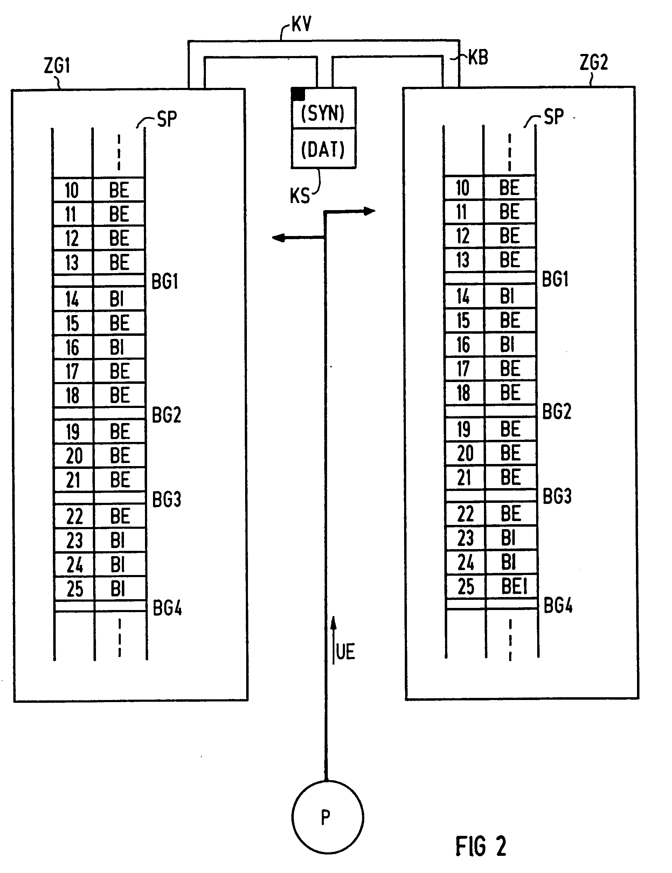

Die Zentralgeräte ZG1, ZG2 enthalten für die redundante Steuerung des Prozesses P ein identisches Steuerprogramm SP, das sich aus Teilen des Betriebssystems BS und des Anwenderprogramms AP zusammensetzt. Zumindest das identische Steuerprogramm SP beinhaltet vorgebbare Synchronisationspunkte. Solche Synchronisationspunkte können am Anfang bzw. am Ende eines jeweiligen Programmabschnittes als Bausteingrenzen BG1...BG4 (FIG 2) festgelegt sein.

Mit dem übrigen nicht identischen Steuerprogramm ist jedes Zentralgerät ZG1, ZG2 in der Lage selbständige Datenverarbeitungen durchzuführen. Diese selbständigen Aufgaben könnten beispielsweise in den Zeiträumen durchgeführt werden, in denen kein redundanter Betrieb vorliegt, oder sie könnten beispielsweise im Multitaskingverfahren durchgeführt werden. Zu diesem Zweck könnten die Zentralgeräte ZG1, ZG2 über die Kommunikationsvorrichtung KV oder über eine weitere Kommunikationsvorrichtung, beispielsweise ein übliches Bussystem, das der Übersichtlichkeit halber nicht dargestellt ist, mit anderen Datenverarbeitungsanlagen und Ein-Ausgabegeräten verbunden sein. Selbstverständlich könnten an der redundanten Steuerung eines Prozesses noch weitere Datenverarbeitungsanlagen bzw. Zentralgeräte beteiligt sein, die dann ebenfalls über eine Kommunikationsvorrichtung KV mit den übrigen redundanten Zentralgeräten ZG1, ZG2 verbunden werden müßten.

Zur redundanten Steuerung des Prozesses P wird das jeweilige identische Steuerprogramm SP in den Zentralgeräten ZG1, ZG2 zeitgleich gestartet. Da jedoch in der Praxis beispielsweise die Taktzyklen von Datenverarbeitungsanlagen nie absolut gleich sind, kommt es zu Zeitverschiebungen der Programmabläufe. Solange während des Programmablaufs Befehle ausgeführt werden, die eine Synchronisation der beiden Zentralgeräte ZG1, ZG2 nicht erforderlich machen, ist die Zeitverschiebung der Programmabläufe tolerierbar und eine Synchronisation nicht erforderlich. Bei der Steuerung des Prozesses P können aber auch Ereignisse, im folgenden Unterbrechungsereignisse UE genannt, auftreten, die eine mittelbare Synchronisation der Zentralgeräte ZG1, ZG2 erforderlich machen. Solche Unterbrechungsereignisse UE können beispielsweise Prozeß- und Zeitalarme sein. Das Auftreten eines solchen Unterbrechungsereignisses wird von den Zentralgeräten ZG1, ZG2 erfaßt und bewirkt, daß der aktuell ablaufende Programmabschnitt bis zur folgenden Bausteingrenze BG1...BG4 (FIG 2) abgearbeitet wird und an dieser Bausteingrenze BG1...BG4 (FIG 2) eine Synchronisation der Zentralgeräte ZG1, ZG2 vorgenommen wird.

Die Synchronisation der beiden Zentralgeräte ZG1, ZG2 kann vorteilhaft über die Kommunikationsvorrichtung KV vorgenommen werden. Im Synchronisationsspeicherplatz (SYN) des am Kommunikationsbus KB angeschlossenen Kommunikationsspeichers KS, kann das jeweilige Zentralgerät ZG1, ZG2, das die jeweilige Bausteingrenze BG1...BG4 (FIG 2) als erstes erreicht hat oder das prozeßführende Zentralgerät ZG1, ZG2 die Meldung "Synchronisationspunkt erreicht" ablegen. Angenommen, das prozeßführende System sei das Zentralgerät ZG1. Vom Prozeß P ist ein Unterbrechungsereignis UE über die beiden Ein-Ausgabebaugruppen EA1, EA2 an die Zentralgeräte ZG1, ZG2 gemeldet worden. Das zentralgerät ZG1 hat die auf den aktuell bearbeiteten Programmabschnitt des identischen Steuerprogramms SP folgende Bausteingrenze BG1 als erstes erreicht und die dieses an den Speicherplatz (SYN) gemeldet und verharrt nun im Wartezustand. Kurz darauf wird auch vom Zentralgerät ZG2 die Bausteingrenze BG1 erreicht. Daraufhin prüft das Zentralgerät ZG2 über die Kommunikationsvorrichtung KV, ob die Meldung "Synchronisationspunkt erreicht" vom Zentralgerät ZG1 bereits vorliegt. Liegt die Meldung vor, fahren beide Zentralgeräte mit der Ausführung des nächsten Programmabschnittes fort. Falls das Zentralgerät ZG2 zuerst die Bausteingrenze BG1 erreicht, bleibt es solange im Wartezustand, bis die Abfrage der Meldung ein positives Ergebnis liefert.

Bei der Steuerung des Prozesses P können aber auch Ereignisse auftreten, die eine unmittelbare Synchronisation der Zentralgeräte ZG1, ZG2 erfordern. Solche Ereignisse sind beispielsweise Zugriffe auf die Prozeßperipherie, Abfrage von Zeitzellen, etc. Diese Ereignisse sind dadurch charakterisiert, daß sie vom identischen Steuerprogramm SP ausgelöst werden und unmittelbare Veränderungen des Prozeßabbildes in der Datenverarbeitungsanlage zur Folge haben. Deshalb werden diese Ereignisse im folgenden als durch Interne-Befehle BI ausgelöste, interne Ereignisse bezeichnet.

Zur Verarbeitung solcher Interner-Befehle BI kann beispielsweise ein entsprechendes Unterprogramm vorgesehen werden, oder das für die Decodierung der Befehle zuständige Mikroprogramm bzw. der Befehlsinterpretor einer jeweiligen Zentraleinheit CPU wird entsprechend erweitert.

Wird vom jeweiligen Zentralgerät ZG1, ZG2 ein solcher Interner-Befehl BI erkannt, so wird die weitere Ausführung des aktuellen Programmabschnittes des identischen Steuerprogramms SP sofort unterbrochen und über die Kommunikationsvorrichtung KV den übrigen beteiligten Zentralgeräten ZG1, ZG2 das Erreichen eines Synchronisationspunktes, wie oben bei den Unterbrechungsereignissen UE beschrieben, mitgeteilt. Wird durch einen Internen-Befehl BI ein aktuelles Datum des jeweiligen Zentralgerätes ZG1, ZG2 geändert, beispielsweise dadurch, daß der Interne-Befehl BI eine Neuberechnung eines bestimmten Wertes vornimmt, so kann gleichzeitig mit der Meldung, daß der Synchronisationspunkt erreicht ist, an den Kommunikationsspeicher KS auch das neue Datum (DAT) übermittelt werden. Das Zentralgerät ZG2 kann dann das Erreichen des Synchronisationspunktes des Zentralgerätes ZG1 abfragen und das geänderte Datum mit dem Ergebnis der eigenen Berechnung auf Gleichheit überprüfen.

Sind mehrere Zentralgeräte ZG1, ZG2 bzw. Datenverarbeitungsanlagen an der redundanten Steuerung des Prozesses P beteiligt, so müßten Maßnahmen getroffen werden, mittels derer das Erreichen eines Synchronisationspunktes einer jeweiligen Datenverarbeitungsanlage durch die übrigen Datenverarbeitungsanlagen festgestellt werden kann. Dazu könnte beispielsweise für jede Datenverarbeitungsanlage im Kommunikationsspeicher KS ein Speicherplatz (SYN) für die Synchronisationsmeldung vorgesehen werden. Solche Maßnahmen sind jedoch aus den üblichen, sogenannten Handshaking-Verfahren bekannt.

Wie in FIG 1 durch die gestrichelt angedeutete Verbindung des Zentralgerätes ZG2 mit der Ein-Ausgabeeinheit EA1 angedeutet ist, kann ein redundanter Betrieb der beiden Zentralgeräte ZG1, ZG2 auch einkanalig erfolgen. In diesem Fall würde die Prozeßsteuerung das Prozesses P nur über die Ein-Ausgabeeinheit EA1 vom Zentralgerät ZG1 vorgenommen werden. Das Zentralgerät ZG2 würde lediglich im passiven Betrieb die Prozeßdaten über die Verbindung mit der Ein-Ausgabeeinheit EA1 übernehmen und somit immer über ein aktuelles Prozeßabbild verfügen, so daß es jederzeit auch die aktive Prozeßsteuerung übernehmen könnte. Für die durchzuführende Synchronisation ergeben sich dadurch jedoch keine Unterschiede.

FIG 2 zeigt einen Ausschnitt des identischen Steuerprogramms SP der Zentralgeräte ZG1, ZG2. Das identische Steuerprogramm SP ist in unterschiedlich lange Programmabschnitte eingeteilt, die durch die Bausteingrenzen BG1...BG4 voneinander getrennt sind.

Die Einteilung der Programmabschnitte kann dabei beispielsweise vom Anwender vorgegeben werden, oder softwaregesteuert durch automatische Strukturierung erfolgen. Bei üblichen Automatisierungsgeräten beispielsweise lassen sich Programme von vornherein in Form von einzelnen Programmbausteinen zusammenfügen. In den identischen Steuerprogrammen SP sind die Speicherplätze 10 bis 25 mit Befehlen BE und mit Internen-Befehlen BI besetzt. Der zu steuernde Prozeß P ist durch einen Kreis dargestellt.

Vom Prozeß P gelangt ein Unterbrechungsereignis UE an die Zentralgeräte ZG1, ZG2. Die versetzt gezeichneten Pfeile, die über eine dick ausgezogene Linie mit dem Prozeß P verbunden sind, sollen andeuten, daß das Unterbrechungsereignis UE zu einem Zeitpunkt an das Zentralgerät ZG1 gelangt, an dem das identische Steuerprogramm SP bereits beim Befehl BE Nummer 12 angelangt ist, wogegen das identische Steuerprogramm SP des Zentralgerätes ZG2 erst beim Befehl BE Nummer 11 angelangt ist.

Das Zentralgerät ZG1 wird demnach als erstes die Bausteingrenze BG1 erreicht haben und im Kommunikationsspeicher KS die Synchronisationsmeldung (SYN) ablegen, um dann im Wartezustand zu verharren. Wenn das Zentralgerät ZG2 ebenfalls die Bausteingrenze BG1 erreicht hat, fragt es über die Kommunikationsvorrichtung KV die Synchronisationsmeldung des Zentralgerätes ZG1 ab und beide Geräte beginnen mit der Ausführung des nächsten Programmabschnittes.

Im jeweiligen identischen Steuerprogramm SP befinden sich auf den Speicherplätzen 14, 16 und 23 bis 25 Interne-Befehle BI. Wenn das jeweilige interne Steuerprogramm einen solchen internen Befehl BI erreicht, wird der weitere Programmablauf an dieser Stelle sofort unterbrochen und eine Synchronisation wie oben anhand der FIG 1 bereits beschrieben, durchgeführt.

Während des Betriebes können Bedieneingaben, die eine Änderung des Anwenderprogramms beinhalten können, am Zentralgerät ZG1 oder am Zentralgerät ZG2, oder wenn mehrere Zentralgeräte bzw. Datenverarbeitungsanlagen am redundanten Betrieb beteiligt sind, an einer dieser Datenverarbeitungsanlagen bzw. an einem Zentralgerät ohne Störung oder Beeinträchtigung des Prozeßbetriebes vorgenommen werden. Durch das identische Steuerprogramm SP können diese Daten dann über die jeweilige Kommunikationsvorrichtung KV den übrigen Datenverarbeitungsanlagen bzw. Zentralgeräten automatisch übermittelt werden.

## Patentansprüche

1. Verfahren zur Synchronisation von mindestens zwei untereinander über eine Kommunikationsvorrichtung (KV) verbundenen Datenverarbeitungsanlagen (ZG1,ZG2), deren Steuerprogramm (SP) für redundanten Betrieb identisch ist, wobei das identische Steuerprogramm (SP) aus einem Betriebssystem (BS) sowie aus einem Anwenderprogramm (AP) besteht, wobei die Synchronisation über die Kommunikationsvorrichtung (KV) vornehmbar ist, **dadurch gekennzeichnet,**
a) daß das Steuerprogramm (SP) in Programmbausteine mit vorgebbaren Baustein grenzen (BG1 bis BG4) unterteilbar ist,
b) daß für jede der Datenverarbeitungsanlagen (ZG1,ZG2) Unterbrechungsereignisse (UE) erkennbar sind, die eine mittelbare Synchronisation erfordern, und
c) daß jede Datenverarbeitungsanlage (ZG1,ZG2), die während des Programmablaufs ein Unterbrechungsereignis (UE) erkennt, den aktuellen Programmbaustein bis zur folgenden Bausteingrenze (BG1 bis BG4) abarbeitet und sich anschließend mit den übrigen Datenverarbeitungsanlagen (ZG1,ZG2) synchronisiert.

2. Verfahren zur Synchronisation von mindestens zwei untereinander über eine Kommunikationsvorrichtung (K) verbundenen Datenverarbeitungsanlagen (ZG1,ZG2), deren Steuerprogramm (SP) für redundanten Betrieb identisch ist, wobei das identische Steuerprogramm (SP) aus einem Betriebssystem (BS) sowie aus einem Anwenderprogramm (AP) besteht, wobei die Synchronisation über die Kommunikationsvorrichtung (KV) vornehmbar ist, insbesondere Verfahren nach Anspruch 1, **dadurch gekennzeichnet,**
d) daß das Steuerprogramm (SP) Interne-Befehle (BI) aufweist, die eine unmittelbare Synchronisation erfordern, und
e) daß jede der Datenverarbeitungsanlagen (ZG1,ZG2), die vor einer anderen Datenverarbeitungsanlage (ZG1,ZG2) einen Internen-Befehl (BI) decodiert, solange im Wartezustand bleibt, bis mindestens eine der verbleibenden Datenverarbeitungsanlagen (ZG1,ZG2) ebenfalls den Internen-Befehl (BI) bearbeitet hat.

3. Verfahren nach einem der vorstehenden Ansprüche, **dadurch gekennzeichnet,** daß mindestens zwei, ein identisches Steuerprogramm (SP) aufweisende Datenverarbeitungsanlagen (ZG1,ZG2) jeweils eine identische Ein-Ausgabeeinheit (EA1,EA2) zugeordnet ist, die über das identische Steuerprogramm (SP) einer jeweiligen Datenverarbeitungsanlage (ZG1,ZG2) bedienbar ist.

4. Verfahren nach einem der vorstehenden Ansprüche, **dadurch gekennzeichnet,** daß eine jeweilige Ein-Ausgabeeinheit (EA1,EA2) durch mindestens eine, ein identisches Steuerprogramm (SP) aufweisende Datenverarbeitungsanlage (ZG1,ZG2) identifizierbar ist, wobei eine Meldung jeweils identischer Einheiten als mögliche redundante Einheiten erfolgt und wobei die identischen Einheiten bei Verifizierung durch den Anwender vom identischen Steuerprogramm (SP) als redundante Einheiten behandelt werden.

5. Verfahren nach einem der vorstehenden Ansprüche, **dadurch gekennzeichnet,** daß mindestens zwei, ein identisches Steuerprogramm (SP) aufweisende Datenverarbeitungsanlagen (ZG1,ZG2), eine Ein-Ausgabeeinheit (EA1, EA2) Zugeordnet ist, die alternativ über jeweils ein identisches Steuerprogramm (SP) einer Datenverarbeitungsanlage (ZG1,ZG2) bedienbar ist.

6. Verfahren nach einem der vorstehenden Ansprüche, **dadurch gekennzeichnet,** daß bei der Abarbeitung des identischen Steuerprogramms (SP) durch mindestens zwei Datenverarbeitungsanlagen (ZG1,ZG2) eine Datenverarbeitungsanlage (ZG1,ZG2) die Prozeßführung übernimmt und die übrigen Datenverarbeitungsanlagen (ZG1,ZG2) redundant an der Prozeßführung beteiligt sind.

7. Verfahren nach einem der vorstehenden Ansprüche, **dadurch gekennzeichnet,** daß Bedieneingaben, die eine Änderung des Anwenderprogramms (AP) beinhalten können, während des Betriebs mindestens einer, ein identisches Steuerprogramm (SP) aufweisenden Datenverarbeitungsanlage (ZG1,ZG2) an dieser vornehmbar sind und die Bedieneingaben allen weiteren im Betrieb befindlichen Datenverarbeitungsanlagen (ZG1,ZG2) automatisch übermittelt werden.

8. Verfahren nach Anspruch 6, **dadurch gekennzeichnet,** daß eine Änderung des identischen Steuerprogramms (SP) nach folgenden Verfahrensschritten vornehmbar ist:
a) Eine redundante Datenverarbeitungsanlage (ZG1,ZG2) wird von den übrigen Datenverarbeitungsanlagen (ZG1,ZG2) abgekoppelt,
b) die Änderung des Steuerprogramms (SP) wird an der abgekoppelten Datenverarbeitungsanlage (ZG1,ZG2) vorgenommen,
c) die abgekoppelte Datenverarbeitungsanlage wird wieder mit den übrigen Datenverarbeitungsanlagen (ZG1,ZG2) verbunden und übernimmt die aktuellen Daten des prozeßführenden oder einer weiteren redundanten Datenverarbeitungsanlage (ZG1,ZG2),
d) die Datenverarbeitung (ZG1,ZG2) mit dem geänderten Steuerprogramm übernimmt die Prozeßführung.

9. Verfahren nach Anspruch 6, **dadurch gekennzeichnet,** daß das Auswechseln einer Datenverarbeitungsanlage (ZG1,ZG2) nach folgenden Verfahrensschritten vornehmbar ist:
a) Falls die auszuwechselnde Datenverarbeitungsanlage (ZG1,ZG2) prozeßführend ist, wird die Prozeßführung an eine redundante Datenverarbeitungsanlage (ZG1,ZG2) übergeben,
b) die auszuwechselnde Datenverarbeitungsanlage (ZG1,ZG2) wird von den übrigen Datenarbeitungsanlagen (ZG1,ZG2) abgekoppelt,
c) die einzuwechselnde Datenverarbeitungsanlage wird mit dem übrigen Datenverarbeitungsanlagen (ZG1,ZG2) verbunden,
d) die redundante Hard- und Software der eingewechselten Datenverarbeitungsanlage wird mit der redundanten Hard- und Software einer redundanten Datenverarbeitungsanlage verglichen,
e) nur bei Gleichheit der redundanten Hard- und Software werden die aktuellen Daten der prozeßführenden oder einer redundanten Datenverarbeitungsanlage (ZG1,ZG2) automatisch übernommen und die eingewechselte Datenverarbeitungsanlage (ZG1,ZG2) automatisch am Betrieb beteiligt,
f) bei Ungleichheit der redundanten Hard- und Software erfolgt eine Fehlermeldung.

10. Verfahren nach Anspruch 8 oder 9, **dadurch gegekennzeichnet,** daß zur Übernahme der aktuellen Daten durch eine Datenverarbeitungsanlage die Menge der zu übertragenden Daten vom Anwender projektierbar ist und der Zeitpunkt der Datenübernahme vom Anwenderprogramm vorgebbar ist.

## Claims

1. Method for synchronising at least two data processing systems (ZG1, ZG2), connected to each other by way of a communications device (KV), the control program (SP) of which systems for redundant operation is identical, wherein the identical control program (SP) consists of an operating system (BS) as well as of a user program (AP), wherein synchronisation is able to be carried out by way of the communications device (KV), characterised
a) in that the control program (SP) is able to be subdivided into program blocks with preselectable block limits (BG1 to BG4),
b) in that for each of the data processing systems (ZG1, ZG2) interrupt events (UE) are able to be recognised which require indirect synchronisation and
c) in that each data processing system (ZG1, ZG2) which recognises an interrupt event (UE) during the program run, processes the current program block upto the following block limit (BG1 to BG4) and then synchronises with the remaining data processing systems (ZG1, ZG2).

2. Method for synchronising at least two data processing systems (ZG1, ZG2), connected to each other by way of a communications device (K), the control program (SP) of which systems for redundant operation is identical, wherein the identical control program (SP) consists of an operating system (BS) as well as of a user program (AP), wherein synchronisation is able to be carried out by way of the communications device (KV), in particular the method according to claim 1, characterised
d) in that the control program (SP) has internal commands (BI), which require direct synchronisation and
e) in that each of the data processing systems (ZG1, ZG2) which decodes on internal command (BI) before another data processing system (ZG1, ZG2), remains in the waiting state until at least one of the remaining data processing systems (ZG1, ZG2) has also processed the internal command (BI).

3. Method according to one of the preceding claims, characterised in that, associated with at least two data processing systems (ZG1, ZG2) having an identical control program (SP), there is in each case an identical input-output unit (EA1, EA2) which can be operated by way of the identical control program (SP) of a respective data processing system (ZG1, ZG2).

4. Method according to one of the preceding claims, characterised in that a respective input-output unit (EA1,EA2) is able to be identified by at least one data processing system (ZG1, ZG2) having an identical control program (SP), wherein a message in each case from identical units occurs as possible redundant units, and wherein the identical units are treated as redundant units by the identical control program (SP) with verification by the user.

5. Method according to one of the preceding claims, characterised in that, associated with at least two data processing systems (ZG1, ZG2) having an identical control program (SP), there is an input-output unit (EA1, EA2) which can be operated alternatively in each case by way of an identical control program (SP) of a data processing system (ZG1, ZG2).

6. Method according to one of the preceding claims, characterised in that, with the processing of the identical control program (SP) by at least two data processing systems (ZG1, ZG2), one data processing system (ZG1, ZG2) takes over the process control and the remaining data processing systems (ZG1, ZG2) participate redundantly in the process control.

7. Method according to one of the preceding claims, characterised in that, during operation of at least one data processing system (ZG1, ZG2) having an identical control program (SP), operating inputs, which can contain an alteration of the user program (AP), are able to be carried out in this system and the operating inputs are automatically transmitted to all further data processing systems (ZG1, ZG2) which are in operation.

8. Method according to claim 6, characterised in that an alteration of the identical control program (SP) is able to be carried out according to the following steps of procedure:
a) a redundant data processing system (ZG1, ZG2) is uncoupled from the remaining data processing systems (ZG1, ZG2),
b) the alteration of the control program (SP) is carried out in the uncoupled data processing system (ZG1, ZG2),
c) the uncoupled data processing system is connected again to the remaining data processing systems (ZG1, ZG2) and takes over the current data of the process-controlling or of a further redundant data processing system (ZG1, ZG2),
d) the data processing (sic) (ZG1 ZG2) with the altered control program takes over the process control.

9. Method according to claim 6, characterised in that the exchange of a data processing system (ZG1, ZG2) is able to be carried out according to the following steps of procedure:
a) if the data processing system (ZG1, ZG2) to be exchanged is process-controlling, the process control is transferred to a redundant data processing system (ZG1, ZG2),
b) the data processing system (ZG1, ZG2) to be exchanged is uncoupled from the remaining data processing systems (ZG1, ZG2),
c) the data processing system to be changed is connected to the remaining data processing systems (ZG1, ZG2),
d) the redundant hardware and software of the data processing system to be changed is compared with the redundant hardware and software of a redundant data processing system,
e) only when the redundant hardware and software are equal is the current data of the process-controlling or of a redundant data processing system (ZG1, ZG2) taken over automatically and the changed data processing system (ZG1, ZG2) automatically participates in operation,
f) when the redundant hardware and software are unequal an error message occurs.

10. A method according to claim 8 or 9, characterised in that for the transfer of the current data by a data processing system the quantity of the data to be transferred is able to be projected by the user and the point in time of the data transfer is able to be preselected by the user program.

## Revendications

1. Procédé pour synchroniser au moins deux installations de traitement de données (ZG1, ZG2), qui sont reliées entre elles par un dispositif de communication (KG) et dont le programme de commande (SP) est identique pour un fonctionnement rendondant, et selon lequel le programme identique de commande (SP) est constitué par un système d'exploitation (BS) ainsi que par un programme d'utilisateur (AP), la synchronisation pouvant être exécutée par l'intermédiaire du dispositif de communication (KG), caractérisé par le fait
a) que le programme de commande (SP) peut être subdivisé en modules de programme comportant des limites (BG1 à BG4) pouvant être prédéterminées,
b) que pour chacune des installations de traitement de données (ZG1, ZG2), on peut identifier des phénomènes d'interruption (UE) qui requièrent une synchronisation immédiate, et
c) que chaque installation de traitement de données (ZG1, ZG2), qui identifie un évènement d'interruption (U1) pendant l'exécution du programme, traite le module actuel de programme jusqu'à la limite suivante (BG1 à BG4) du module et se synchronise ensuite sur les autres installations de traitement de données (ZG1, ZG2).

2. Procédé pour synchroniser au moins deux installations de traitement de données (ZG1, ZG2), qui sont reliées entre elles par un dispositif de communication (KG) et dont le programme de commande (SP) est identique pour un fonctionnement rendondant, et selon lequel le programme identique de commande (SP) est constitué par un système d'exploitation (BS) ainsi que par un programme d'utilisateur (AP), la synchronisation pouvant être exécutée par l'intermédiaire du dispositif de communication (KG), suivant la revendication 1, caractérisé par le fait
d) que le programme de commande (SP) comporte des instructions internes (BI), qui requièrent une synchronistion immédiate, et
e) que chacune des installations de traitement de données (ZG1, ZG2), qui décode une instruction interne (BI) avant une autre installation de traitement de données (ZG1, ZG2), reste dans l'état latent jusqu'à ce qu'au moins l'une des autres installations de traitement de données (ZG1, ZG2) ait également traité l'instruction interne (BI).

3. Procédé suivant l'une des revendications précédentes, caractérisé par le fait qu'à au moins deux installations de traitement de données (ZG1, ZG2), qui possèdent un programme de commande identique (SP), sont associées respectivement des unités d'entrée-sortie identiques (E1, E2), dont chacune peut être commandée par l'intermédiaire du programme de commande identique (SP) d'une installation respective de traitement de données (ZG1, ZG2).

4. Procédé suivant l'une des revendications précédentes, caractérisé par le fait qu'une unité respective d'entrée-sortie (EA1, EA2) peut être identifiée par au moins une installation de traitement de données (ZG1, ZG2) qui possède un programme identique de commande (SP), et qu'une signalisation d'unités identiques respectives, en tant qu'unités redondantes possibles, est réalisée et que, lors d'une vérification, les unités identiques sont traitées comme des unités redondantes par l'utilisateur du programme de commande identique (SP).

5. Procédé suivant l'une des revendications précédentes, caractérisé par le fait qu'à au moins deux installations de traitement de données (ZG1, ZG2), qui possèdent un programme de commande identique (SP), est associée une unité d'entrée-sortie (EA1, EA2), qui peut être commandée alternativement par l'intermédiaire respectivement d'un programme de commande identique (SP) d'une installation de traitement de données (ZG1, ZG2).

6. Procédé suivant l'une des revendications précédentes, caractérisé par le fait que dans le cas du traitement du programme de commande identique (SP) par au moins deux installations de traitement de données (ZG1, ZG2), l'une de ces installations assume la conduite du processus et les autres installations de traitement de données (ZG1, ZG2) participent de façon redondante à la conduite du processus.

7. Procédé suivant l'une des revendications précédentes, caractérisé par le fait que des entrées de commande, qui peuvent contenir une modification du programme d'utilisateur (AP), peuvent être exécutées pendant le fonctionnement d'au moins une installation de traitement de données (ZG1, ZG2) possédant un programme de commande identique (SP), dans cette installation de traitement de données et que les entrées de commande sont transmises de façon automatique à toutes les autres installations de traitement de données (ZG1, ZG2) en fonctionnement.

8. Procédé suivant la revendication 6, caractérisé par le fait qu'une modification du programme de commande identique (SP) peut être exécutée conformément aux étapes opératoires indiquées ci-après :
a) une installation de traitement de données redondante (ZG1, ZG2) est découplée des autres installations de traitement de données (ZG1, ZG2),
b) la modification du programme de commande (SP) est réalisée dans l'installation de traitement de données (ZG1, ZG2) qui est découplée,
c) l'installation de traitement de données découplée est à nouveau reliée aux autres installations de traitement de données (ZG1, ZG2) et prend en charge des données actuelles de l'installation de traitement de données (ZG1, ZG2) qui conduit le processus ou d'une autre installation redondante de traitement de données (ZG1, ZG2),
d) l'installation de traitement de données (ZG1, ZG2) comportant le programme de commande modifié prend en charge la conduite du processus.

9. Procédé suivant la revendication 6, caractérisé par le fait que le remplacement d'une installation de traitement de données (ZG1, ZG2) peut être réalisé conformément aux étapes opératoires suivantes :
a) dans le cas où l'installation de traitement de données (ZG1, ZG2) qui doit être remplacée exécute la conduite du processus, la conduite du processus est transférée à une installation de traitement de données redondante (ZG1, ZG2),
b) l'installation de traitement de données (ZG1, ZG2) qui doit être remplacée est découplée des autres installations de traitement de données (ZG1, ZG2),
c) l'installation de traitement de données qui doit être introduite en remplacement est reliée aux autres installations de traitement de données (ZG1, ZG2),
d) le matériel et le logiciel redondants de l'installation de traitement de données qui doit être introduites en remplacement sont comparés aux matériels ou aux logiciels redondants d'une installation de traitement de données redondante,
e) uniquement en cas d'identité des matériels et logiciels redondants, les données actuelles de l'installation de traitement de données (ZG1, ZG2) conduisant le processus ou d'une installation redondante de traitement de données (ZG1, ZG2) sont pris en charge automatiquement et que l'installation de traitement de données (ZG1, ZG2), introduite en remplacement participe automatiquement au fonctionnement,
f) en cas d'inégalité des matériels et logiciels redondants, une signalisation d'erreur est déclenchée.

10. Procédé suivant la revendication 8 ou 9, caractérisé par le fait que pour le transfert des données actuelles par une installation de traitement de données, la quantité des données qui doit être transmises peut être prévue à l'avance par l'utilisateur et que l'instant du transfert des données peut être prédéterminé par le programme d'utilisateur.
